# EUROPÄISCHE PATENTSCHRIFT

(11) **EP 2 303 972 B1**
(45) Veröffentlichungstag und Bekanntmachung des Hinweises auf die Patenterteilung: **14.01.2015**
(21) Anmeldenummer: 09757217.6
(22) Anmeldetag: 28.05.2009
(51) Int. Cl.: C09C 1/36

(54) **VERFAHREN ZUR OBERFLÄCHENBESCHICHTUNG VON ANORGANISCHEN FESTKÖRPERPARTIKELN, INSBESONDERE TITANDIOXID-PIGMENTPARTIKEL**
METHOD FOR COATING THE SURFACE OF INORGANIC SOLID PARTICLES, IN PARTICULAR TITANIUM DIOXIDE PIGMENT PARTICLES
PROCÉDÉ DE REVÊTEMENT DE SURFACE DE PARTICULES SOLIDES INORGANIQUES, EN PARTICULIER DE PARTICULES PIGMENTAIRES DE DIOXYDE DE TITANE

(30) Priorität: 02.06.2008 DE 102008026300
(43) Veröffentlichungstag der Anmeldung: 06.04.2011
(73) Patentinhaber: KRONOS INTERNATIONAL, INC., 51373 Leverkusen (DE)
(72) Erfinder: FRAHM, Heiko, 51375 Leverkusen (DE); FRIEDRICH, Joerg, 42799 Leichlingen (DE); KAMINSKI, Mark, 51371 Leverkusen (DE); SCHMEIER, Erwin, 51766 Engelskirchen (DE); DREWS-NICOLAI, Lydia, 51067 Köln (DE); JUERGENS, Volker, 57399 Kirchhundem (DE)
(86) Internationale Anmeldenummer: PCT/EP2009/003805
(87) Internationale Veröffentlichungsnummer: WO 2009/146834

(56) Entgegenhaltungen:
- GB-A- 1 179 171
- US-A- 5 993 533

## Beschreibung

### Technologischer Hintergrund der Erfindung

Feinteilige anorganische Festkörperpartikel werden vielfach oberflächenbeschichtet, um bestimmte Eigenschaften zu verändern wie beispielsweise Abriebfestigkeit, Oberflächenladung, Dispergiereigenschaften, Säure- oder Lichtbeständigkeit. Beispielsweise beschreibt die US 2,885,366 das Aufbringen eines dichten Siliciumdioxid-Überzugs auf Substratteilchen wie Nickel- oder Eisenpulver, Glasfasern oder Titandioxid. Farb- und Weißpigmente werden regelmäßig mit verschiedenen Oxiden und Hydroxiden beschichtet (z.B. EP 0 130 272 A1, US Re.27818).

Die Oberflächenbehandlung insbesondere von TiO₂-Pigmenten findet üblicherweise in der wässrigen Phase statt, wobei Metalloxide, -hydroxide, -phosphate oder ähnliche Verbindungen auf der Partikeloberfläche abgeschieden werden. Das Verfahren wird üblicherweise als Batchprozess geführt und geht von einer wässrigen Pigmentpartikelsuspension aus, die zunächst deagglomeriert wird, üblicherweise in einer Rührwerksmühle. Anschließend werden entsprechende Metallsalze in gelöster Form als sogenannte Vorläuferverbindungen zugegeben und der pH-Wert der Suspension wird mit alkalischen oder sauren Substanzen so eingestellt, dass die Vorläuferverbindungen als Oxide, Hydroxide etc. ausfallen.
Bei dem klassischen Verfahren besteht die Gefahr der erneuten Partikelagglomeration in der Suspension, so dass die abgeschiedenen Beschichtungssubstanzen nicht das einzelne Partikel sondern häufig ein Agglomerat umhüllen. Die Agglomerate werden in der abschließenden Trockenmahlung wieder aufgebrochen, so dass im Endprodukt nicht alle Partikel mit einer geschlossenen Hülle versehen sind, sondern die Partikel auch unbeschichtete Oberflächenanteile aufweisen. Außerdem wird ein Teil der Beschichtungssubstanzen nicht auf der Partikeloberfläche fixiert, sondern bildet Flocken neben den Partikeln. Diese Flocken können aus der Suspension nicht mehr entfernt werden und wirken sich nachteilig auf die optischen Eigenschaften der Pigmente aus, beispielsweise auf Aufhellvermögen bzw. Färbekraft (tinting strength TS).

Die US 5,993,533 offenbart ein Verfahren, in dem Titandioxidpigment in einem Inline-Mischer mit SiO₂ und Al₂O₃ beschichtet wird. Die Behandlung verläuft in zwei sich anschließenden Reifestufen bei 80 bis 100 °C und bei pH-Werten von >9,5 bzw. <8,5.

Die GB 1 340 045 beschreibt ein Batch-Verfahren zur Oberflächenbeschichtung von Titandioxidpigment, wobei das Pigment in einer Suspension für bis zu zwei Stunden einer intensiven Rührung in einem Rührgefäß unterworfen wird, währenddessen die Beschichtungssubstanzen zugegeben und aufgebracht werden.

Die WO 2008/071382 A1 beschreibt ein weiteres Verfahren, bei dem anorganische Partikel während der kontinuierlichen Förderung durch eine Rührwerksmühle oberflächenbeschichtet werden. Hier wird eine besonders glatte und gleichmäßige Oberflächenbeschichtung der einzelnen Partikel erzielt.

### Aufgabenstellung und Kurzbeschreibung der Erfindung

Der Erfindung liegt die Aufgabe zugrunde, ein alternatives Verfahren anzugeben, mit Hilfe dessen eine glatte, gleichmäßige und durchgehende Oberflächenbeschichtung auf Festkörperpartikeln erzeugt werden kann.

Die Aufgabe wird gelöst durch ein Verfahren zur Beschichtung von anorganischen Festkörperpartikeln in einer wässrigen Suspension mit mindestens einer Beschichtungssubstanz umfassend die Schritte:
a) Deagglomeration der in wässriger Suspension befindlichen Festkörperpartikel,
b) Zugabe einer wasserlöslichen Vorläuferverbindung der Beschichtungssubstanz in die Suspension,
c) unmittelbar dem Schritt b) folgende Homogenisierung der Suspension in einem Dispergierapparat, wobei sich in den Schritten a) bis c) Temperatur und pH-Wert der Suspension nicht signifikant ändern,
d) Förderung der Suspension in einen Behälter und Fällung der Beschichtungssubstanz auf die Partikeloberfläche und optional Aufbringung weiterer Beschichtungen,
e) Abtrennung der Festkörperpartikel aus der Suspension.

Weitere vorteilhafte Ausführungen der Erfindung sind in den Unteransprüchen beschrieben.

Gegenstand der Erfindung ist also ein Verfahren zur Oberflächenbeschichtung von Festkörperpartikeln mit einer glatten, gleichmäßigen und geschlossenen Hülle aus mindestens einer anorganischen Verbindung.

### Beschreibung der Erfindung

Das erfindungsgemäße Verfahren geht aus von einer wässrigen Suspension unbehandelter anorganischer Festkörperpartikel, die im Folgenden auch als Grundkörper bezeichnet werden. Geeignet sind feinteilige anorganische Festkörper mit einer Partikelgröße im Bereich von etwa 0,001 bis 1 µm, die in wässrigen Suspensionen verarbeitet werden, wie z.B. Pigmente (Titandioxid, Farbpigmente, Effektpigmente etc.), Füllstoffe, Titanate, Eisen-, Nickel- oder andere magnetische Partikel.
Als Beschichtung kommen Oxide, Hydroxide, Phosphate und ähnliche Verbindungen der bekannten Elemente Si, Ti, Al, Zr, Sn, Mn, Ce und weiterer Elemente in Frage. Hier und im Folgenden soll unter "Oxid" auch das jeweilige Hydroxid oder wasserhaltige Oxid verstanden werden. Insbesondere handelt es sich um anorganische Beschichtungen.

In einer besonderen Ausführung der Erfindung kommen unbehandelte Titandioxidpigmentpartikel (TiO₂-Grundkörper) zum Einsatz. Es kann sowohl nach dem Sulfatverfahren wie nach dem Chloridverfahren hergestellter TiO₂-Grundkörper eingesetzt werden. Der TiO₂-Grundkörper kann Anatas- oder Rutilstruktur haben. Bevorzugt ist Rutil. Üblicherweise ist der TiO₂-Grundkörper zur Verbesserung der Photostabilität des TiO₂-Pigments mit bekannten Elementen wie z. B. Al dotiert. Beispielsweise wird im Chloridverfahren eine solche Menge AlCl₃ zusammen mit TiCl₄ oxidiert, dass der TiO₂-Grundkörper etwa 0,5 bis 2,0 Gew.-% Al gerechnet als Al₂O₃ aufweist. Bei der Titandioxidherstellung nach dem Sulfatverfahren wird das hydrolysierte Titanylsulfat mit Glühzusätzen wie beispielsweise Kaliumhydroxid oder Phosphorsäure versetzt und anschließend calciniert. Der TiO₂-Grundkörper aus dem Sulfatverfahren enthält üblicherweise etwa 0,2 - 0,3 Gew.-% K sowie 0,05 bis 0,4 Gew.-% P gerechnet jeweils als Oxid.

Das erfindungsgemäße Verfahren zeichnet sich dadurch aus, dass die Partikel sich während der Oberflächenbeschichtung in der wässrigen Suspension in einem optimalen Dispergierzustand befinden. Das Verfahren geht somit von einer wässrigen Suspension unbehandelter anorganischer Festkörperpartikel aus, die in einem ersten Schritt (Schritt a)) einer intensiven Deagglomeration unterworfen werden.

Die Deagglomeration kann beispielsweise in Rührwerksmühlen wie Perlmühlen oder Sandmühlen oder in Ultraschallmühlen durchgeführt werden.

Üblicherweise wird ein Dispergiermittel zugesetzt. Geeignete Dispergiermittel sind dem Fachmann bekannt. Beispielsweise wird bei der Deagglomeration von TiO₂-Grundkörper in Sandmühlen bevorzugt Natriumsilikat oder Natriumhexametaphosphat als Dispergiermittel eingesetzt. Die Konzentration des Dispergiermittels liegt üblicherweise im Bereich von 0,05 bis 5,0 kg/t TiO₂.

Üblicherweise wird auch der pH-Wert der Suspension in Abhängigkeit von Partikelart und Dispergiermittel eingestellt. Beispielsweise wird bei der Deagglomeration von TiO₂-Grundkörper aus dem Chloridverfahren der pH-Wert auf Werte von etwa 9 bis 12 oder von etwa 2 bis 5 eingestellt. Die Temperatur von TiO₂-Grundkörpersuspensionen liegt üblicherweise bei etwa 40 bis 80 °C.

Die deagglomertierte Suspension wird zur Abtrennung von Mahlkörpern, von deren Bruchstücken oder von nicht ausreichend zerkleinertem Aufgabegut klassiert. Hierzu werden Siebe und Hydrozyklone eingesetzt. Der Feinanteil aus der Hydrozyklon-Klassierung kann anschließend für die Oberflächenbeschichtung eingesetzt werden, während der Grobgutanteil in den Verfahrensschritt Deagglomeration zurückgeführt werden kann.

In einem Schritt b) wird der Suspension eine Vorläuferverbindung der Beschichtungssubstanz in wässriger Lösung zugegeben, üblicherweise wie bei den klassischen Verfahren in Form wasserlöslicher Salze (im Folgenden: Metallsalze). Dem Fachmann sind die entsprechenden Metallsalze geläufig. Beispielsweise kann für die Beschichtung mit SiO₂ als Vorläuferverbindung Natrium- oder Kaliumsilikat (Wasserglas) verwendet werden.
Des Weiteren können auch metallorganische Verbindungen als Vorläuferverbindungen wie beispielsweise Alkoxysilane für die Beschichtung mit SiO₂ eingesetzt werden.
Die Zugabe der Vorläuferverbindung kann entweder in einer Rohrleitung oder batchweise in einen Behälter erfolgen.

Das erfindungsgemäße Verfahren zeichnet sich dadurch aus, dass die Zugabe so schnell auf die Deagglomeration und Klassierung folgt, dass sich Temperatur und pH-Wert nicht signifikant verändern können. Unter "signifikanter" Änderung wird eine Temperaturdifferenz von mehr als 10 °C und eine pH-Wertdifferenz von größer 1 verstanden. Bevorzugt wird die Zugabe spätestens acht Stunden, insbesondere spätestens eine Stunde nach Deagglomeration und Klassierung vorgenommen. Es ist vorteilhaft, in der Zeit vor der Zugabe der Vorläuferverbindung eine Sedimentation der Partikel zu vermeiden.

Unmittelbar nach Zugabe der Vorläuferverbindung wird die Suspension in einem Schritt c) in einem Dispergierapparat homogenisiert. Bevorzugt handelt es sich um Inline-Dispergierapparate, beispielweise um Rotor-Stator-Systeme, statische Mischer oder Ultraschallreaktoren. Während der Homogenisierung findet keine signifikante Änderung von Temperatur und pH-Wert der Suspension statt. Die Homogenisierung sorgt dafür, dass sich um die vereinzelten Partikel bereits eine gleichmäßige adsorbierte Schicht der Vorläuferverbindung ausbildet. Die Fällung der Beschichtungssubstanz findet in Schritt d) statt.

In Schritt d) wird die Suspension in einen Behälter gefördert und die Beschichtungssubstanz durch Einstellung eines geeigneten pH-Werts auf die Partikeloberfläche gefällt. Nach bekannten Methoden wird entsprechend eine sauer oder eine alkalisch reagierende Substanz wie Säure oder Lauge in die Suspension gegeben. Dem Fachmann sind die Fällungsbedingungen für die einzelnen Beschichtungssubstanzen bekannt.
Optional können nach bekannten Methoden darüber hinaus weitere anorganische oder organische Beschichtungen auf die Partikeloberfläche aufgebracht werden.

In einem Schritt e) werden die beschichteten Partikel nach bekannten Verfahren aus der Suspension abgetrennt, gegebenenfalls gewaschen, getrocknet und feingemahlen.

In einer besonderen Ausführung des Verfahrens werden Titandioxid-Grundkörperpartikel mit SiO₂ oder Al₂O₃ beschichtet, bevorzugt mit SiO₂. Dazu wird eine Suspension von TiO₂-Grundkörperpartikel auf einen alkalischen pH-Wert eingestellt, mit Dispergiermittel versetzt, in einer Sandmühle deagglomeriert und anschließend klassiert. Die Suspension weist nachfolgend einen pH-Wert von etwa 9 bis 12 und eine Temperatur von etwa 40 bis 80 °C auf.
Bei der Beschichtung mit SiO₂ wird als Vorläuferverbindung Natriumsilikat-Lösung in einer Menge von etwa 0,1 bis 5,0 Gew.-% SiO₂ bezogen auf TiO₂ zu der Suspension gegeben. Bei einer Beschichtung mit Al₂O₃ eignen sich als Vorläuferverbindungen beispielsweise Aluminate, insbesondere Na-Aluminat. Die Zugabe erfolgt bevorzugt bis spätestens acht Stunden insbesondere bis spätestens eine Stunde nach Deagglomeration und Klassierung, so dass sich Temperatur und pH-Wert nicht signifikant geändert haben. Direkt anschließend wird die mit Silikat versetzte Suspension in einem Inline-Dispergierapparat homogenisiert. Während der Homogenisierung ändern sich Temperatur und pH-Wert der Suspension nicht signifikant.
Anschließend wird die Suspension in einen Behälter gepumpt und der pH-Wert durch Zugabe einer entsprechenden Menge Säure wie beispielsweise HCl auf einen pH-Wert von etwa 1-8 eingestellt. Infolge wird SiO₂ bzw. Al₂O₃ auf der Partikeloberfläche gefällt. Nachfolgend können nach bekannten Methoden weitere Oberflächenbeschichtungen aufgebracht werden, beispielsweise Oxide, Hydroxide, Oxid-Hydrate oder Phosphate von Si, Al, Zr, Sn, Ti, Mn, Ce usw. Bevorzugt wird abschließend eine AI-Verbindung in einer Menge von etwa 0,5 bis 8 Gew.% gerechnet als Al₂O₃ bezogen auf TiO₂ aufgebracht.

Mit dem erfindungsgemäßen Verfahren wird gegenüber den bekannten Oberflächenbehandlungsverfahren eine sehr glatte, gleichmäßige und geschlossene Umhüllung der einzelnen Partikel erzielt. Außerdem ist die mit dem erfindungsgemäßen Verfahren nach Schritt c) erzeugte Suspension von mit SiO₂ oder Al₂O₃ beschichteten TiO₂-Partikeln gegenüber herkömmlich deagglomerierter und klassierter Suspension besonders lagerstabil, da die Siliciumdioxid-Hydrat-Schicht bzw. die Aluminiumoxid-Hydrat-Schicht auf den TiO₂-Partikeln die negative Oberflächenladungsdichte der Partikel bei den herrschenden Bedingungen (Temperatur von etwa 40 bis 80 °C, pH-Wert von etwa 9 bis 12) erhöht. Somit wird eine Reagglomeration des Titandioxids vor der nachfolgenden Fällung in Schritt d) und vor einer weiteren Beschichtung verhindert.

Mit dem erfindungsgemäßen Verfahren wird erreicht, dass nach der abschließenden Feinmahlung weniger unbeschichtete Partikeloberfläche und weniger separat gefällte Beschichtungssubstanz vorhanden sind.
Außerdem ist die nach dem erfindungsgemäßen Verfahren hergestellte Suspension vergleichbar gut filtrierbar wie die nach dem klassischen Verfahren (Vergleichsbeispiel 1) hergestellte.
Erfindungsgemäß behandelte TiO₂-Pigmente weisen eine verbesserte Photostabilität und ein deutlich verbessertes Aufhellvermögen (TS) auf. Die TiO₂-Pigmente sind hervorragend geeignet zur Verwendung in Kunststoffen insbesondere Masterbatchen sowie in Beschichtungen insbesondere Lacken und in Laminaten.

### Beispiele

Nachfolgend wird die Erfindung anhand von Beispielen näher erläutert, ohne dass diese als Einschränkung der Erfindung zu verstehen sind. Die Mengenangaben beziehen sich jeweils auf den TiO₂-Grundkörper.

### Beispiel 1

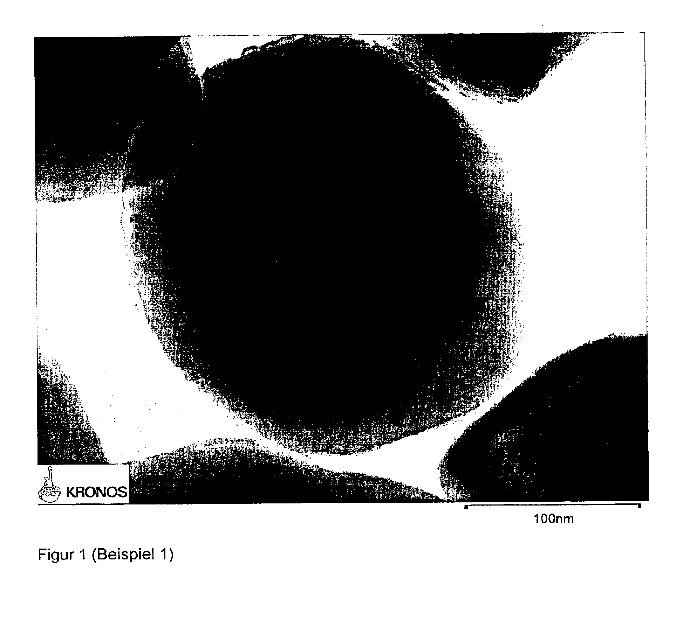

Es wurde eine wässrige Suspension von TiO₂-Grundkörper aus dem Chloridverfahren mit einer Konzentration von 550 kg/m³ und einer Temperatur von 55 °C bereitgestellt, mit NaOH auf einen pH-Wert von etwa 11 eingestellt und mit Natriumhexametaphosphat als Dispergiermittel versetzt. Die so erhaltene Suspension wurde in einer Rührwerksmühle unter Verwendung von Zirkondioxid-Mahlkörpern deagglomeriert und über Siebe und Hydrozyklone klassiert, um Grobgut abzutrennen. Der Feinanteil der deagglomerierten Suspension wurde in einem Behälter gesammelt und wies einen pH-Wert von 10,5 und eine Temperatur von 55 °C auf. Anschließend wurde die Suspension durch einen Inline-Dispergierapparat (Rotor-Stator-System: Ytron Z250.3) gefördert. Über eine Rohrleitung im Zulauf des Inline-Dispergierapparats wurden der Suspension 0,5 Gew.-% wässrige Natriumsilikatlösung gerechnet als SiO₂ bezogen auf TiO₂ zugegeben.
Anschließend wurde die Suspension in einem weiteren Behälter gesammelt. Die Temperatur der Suspension betrug 55 °C und der pH-Wert betrug 10,5. Nachfolgend wurde unter Rühren HCl zugegeben und der pH-Wert auf etwa 3,5 eingestellt.
Nach 30 Minuten Rühren wurden weitere 0,7% SiO₂ als Natriumsilikatlösung und abschließend 2,0% Al₂O₃ als Natriumaluminatlösung zugesetzt. Es stellte sich ein pH-Wert von etwa 6 ein. Die Suspension wurde anschließend filtriert, gewaschen und getrocknet. Das getrocknete Material wurde mit einer Spiralstrahlmühle unter Zugabe von Silikonöl dampfgemahlen.
Die Zusammensetzung des TiO₂-Pigments wurde mit Hilfe von XRF (Röntgenfluoreszenz) analysiert und betrug 95 Gew.-% TiO₂, 1,25 Gew.-% SiO₂ und 3,3 Gew.-% Al₂O₃.
Die Untersuchung unter dem Transmissionselektronenmikroskop zeigte, dass das Pigment eine sehr gleichmäßige, glatte und geschlossene Beschichtung aufweist (Figur 1). Es befindet sich kein ausgeflocktes Beschichtungsmaterial neben den Partikeln.
Das Aufhellvermögen (TS) des so hergestellten Pigments lag bei etwa 103 Punkten.

### Beispiel 2

Es wurde wie in Beispiel 1 verfahren mit dem Unterschied, dass in den Zulauf des Inline-Dispergierapparats anstelle von SiO₂ 0,5 Gew.-% Al₂O₃ in Form von Natriumaluminatlösung zugegeben wurde. Im weiteren Verlauf wurde eine solche Menge SiO₂ und Al₂O₃ zugegeben wurde, dass ein TiO₂-Pigment mit der Zusammensetzung 96 Gew.-% TiO₂, 1,8 Gew.-% SiO₂ und 2,2 Gew.-% Al₂O₃ resultierte.

### Vergleichsbeispiel 1 (klassisches Verfahren)

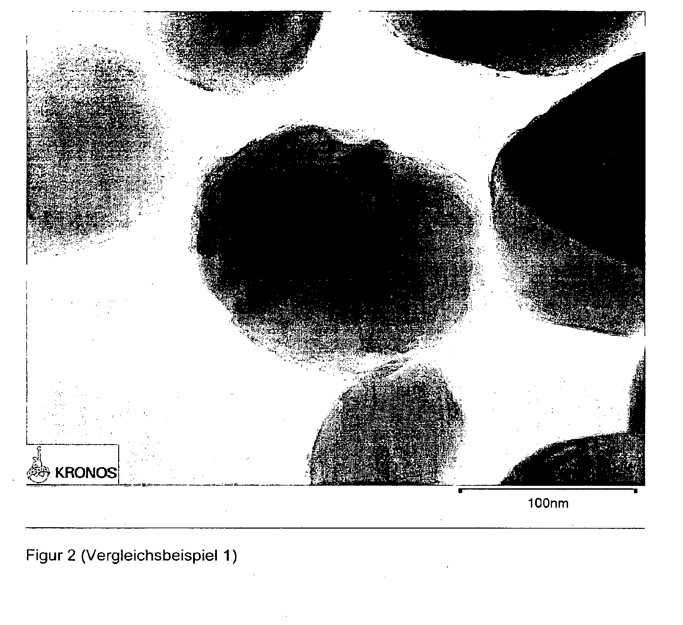

Es wurde eine wässrige Suspension von TiO₂-Grundkörper aus dem Chloridverfahren mit einer Konzentration von 550 kg/m³ und einer Temperatur von 55 °C bereitgestellt, mit NaOH auf einen pH-Wert von etwa 11 eingestellt und mit Natriumhexametaphosphat als Dispergiermittel versetzt. Die so erhaltene Suspension wurde in einer Rührwerksmühle unter Verwendung von Zirkondioxid-Mahlkörpern deagglomeriert und über Siebe und Hydrozyklone klassiert, um Grobgut abzutrennen. Der Feinanteil der deagglomerierten Suspension wurde in einem Behälter gesammelt und wies einen pH-Wert von 10,5 und eine Temperatur von 55 °C auf.
Anschließend wurde die Suspension in einem Behälter gesammelt. Die Temperatur der Suspension betrug 55 °C und der pH-Wert betrug 10,5.
Dann wurden 1.25% SiO₂ als Natriumsilikatlösung zugesetzt, der pH-Wert auf ca. 5 durch Zugabe von HCl gesenkt und abschließend 2,0% Al₂O₃ als Natriumaluminatlösung zugesetzt. Es stellte sich ein pH-Wert von etwa 6 ein. Die Suspension wurde anschließend filtriert, gewaschen und getrocknet. Das getrocknete Material wurde mit einer Spiralstrahlmühle unter Zugabe von Silikonöl dampfgemahlen.
Die Zusammensetzung des TiO₂-Pigments wurde mit Hilfe von XRF (Röntgenfluoreszenz) analysiert und betrug 95 Gew.-% TiO₂, 1,25 Gew.-% SiO₂ und 3,3 Gew.-% Al₂O₃. Die Untersuchung unter dem Transmissionselektronenmikroskop zeigte, dass das Pigment eine im Vergleich zu Beispiel 1 ungleichmäßige Beschichtung aufweist (Figur 2). Es befindet sich ausgeflocktes Beschichtungsmaterial neben den Partikeln.
Das Aufhellvermögen (TS) des so hergestellten Pigments lag bei 99 Punkten.

### Vergleichsbeispiel 2 (sogenanntes TDD-Verfahren)

Es wurde eine wässrige Suspension von TiO₂-Grundkörper aus dem Chloridverfahren mit einer Konzentration von 550 kg/m³ und einer Temperatur von 55 °C bereitgestellt, mit NaOH auf einen pH-Wert von etwa 11 eingestellt und mit Natriumhexametaphosphat als Dispergiermittel versetzt. Anschließend wurde 0,5 Gew.-% wässrige Natriumsilikatlösung gerechnet als SiO₂ bezogen auf TiO₂ zugegeben. Die so erhaltene Suspension wurde mit einer Rührwerksmühle unter Verwendung von Sand-Mahlkörpern deagglomeriert und über Siebe und Hydrozyklone klassiert, um Grobgut abzutrennen. Der Feinanteil der deagglomerierten Suspension wurde in einem Behälter gesammelt und wies einen pH-Wert von 10,5 und eine Temperatur von 55 °C auf.
Nachfolgend wurde unter Rühren HCl zugegeben und der pH-Wert auf etwa 3,5 eingestellt. Nach 30 Minuten Rühren wurden weitere 0,7% SiO₂ als Natriumsilikatlösung und abschließend 2,0% Al₂O₃ als Natriumaluminatlösung zugesetzt. Es stellte sich ein pH-Wert von etwa 6 ein. Die Suspension wurde anschließend filtriert, gewaschen und getrocknet. Das getrocknete Material wurde mit einer Spiralstrahlmühle unter Zugabe von Silikonöl dampfgemahlen.
Die Zusammensetzung des TiO₂-Pigments wurde mit Hilfe von XRF (Röntgenfluoreszenz) analysiert und betrug 95 Gew.-% TiO₂, 1,25 Gew.-% SiO₂ und 3,3 Gew.-% Al₂O₃.
Die Untersuchung unter dem Transmissionselektronenmikroskop zeigte, dass das Pigment im Vergleich zu Beispiel 1 eine ähnlich gleichmäßige, glatte und geschlossene Beschichtung aufweist. Es befindet sich kein ausgeflocktes Beschichtungsmaterial neben den Partikeln. Das Aufhellvermögen (TS) des so hergestellten Pigments lag bei etwa 103 Punkten.

### Testmethoden

### Aufhellvermögen (TS)

Das Aufhellvermögen (TS) der Beispiel- und Vergleichsbeispiel-Pigmente wird nach Einarbeiten in eine Vinnol-Schwarzpaste mit 1,22 % Pigmentvolumenkonzentration bestimmt (sogenannte VIG-Methode).
Das zu untersuchende Titandioxid-Pigment wird mit einer vorgefertigten Vinnol-Schwarzpaste auf einer Farbenausreibmaschine (Automatic Muller) angepastet.
Die erhaltene Graupaste wird mit dem Filmzieher (Applikator) auf eine Karte aufgetragen.
Die Remissionswerte der Schicht werden mit einem HunterLab Colorimeter PD-9000 im nassen Zustand gemessen und auf einen internen Standard bezogen.

### Transmissionselektronenmikroskopie (TEM)

Mit Hilfe der Transmissionselektronenmikroskopie (TEM) kann die Beschichtung der Titandioxid-Partikel sichtbar gemacht werden.

### Fazit

Das erfindungsgemäße Verfahren führt zu Pigmenten mit einer sehr gleichmäßigen, glatten und geschlossenen Beschichtung (Figur 1). Es befindet sich kein ausgeflocktes Beschichtungsmaterial neben den Partikeln. Damit ist die erfindungsgemäß erzeugte Beschichtung deutlich verbessert gegenüber der aus Vergleichsbeispiel 1 (Figur 2), welche nach dem klassischen Verfahren hergestellt wurde, und vergleichbar mit der aus Vergleichsbeispiel 2, die nach dem sogenannten TDD-Verfahren hergestellt wurde. Der Zeitaufwand für die Beschichtung von anorganischen Festkörperpartikeln mit Siliciumdioxid ist mit dem erfindungsgemäßen Verfahren und dem sogenannten TDD-Verfahren deutlich geringer als beim klassischen Verfahren.

Gleichzeitig zeichnet sich das erfindungsgemäße Verfahren jedoch dadurch aus, dass die Suspension ein ähnlich gutes Filtrationsverhalten aufweist wie im klassischen Verfahren (Vergleichsbeispiel 1), wohingegen die nach dem TDD-Verfahren hergestellte Suspension (Vergleichsbeispiel 2) aufgrund von Thixotropie und Ausbildung eines sehr kompakten Filterkuchens nur mit Durchsatzerniedrigung von etwa 30% filtrierbar ist.

## Patentansprüche

1. Verfahren zur anorganischen Beschichtung von anorganischen Festkörperpartikeln in einer wässrigen Suspension mit mindestens einer Beschichtungssubstanz umfassend die Schritte:
a) Deagglomeration der in wässriger Suspension befindlichen Festkörperpartikel,
b) Zugabe einer wasserlöslichen Vorläuferverbindung der Beschichtungssubstanz in die Suspension,
c) unmittelbar dem Schritt b) folgende Homogenisierung der Suspension in einem Dispergierapparat, wobei sich in den Schritten a) bis c) Temperatur und pH-Wert der Suspension nicht signifikant ändern,
d) Förderung der Suspension in einen Behälter und Fällung der Beschichtungssubstanz auf die Partikeloberfläche und optional Aufbringung weiterer Beschichtungen,
e) Abtrennung der Festkörperpartikel aus der Suspension.

2. Verfahren nach Anspruch 1 **dadurch gekennzeichnet, dass** die Festkörperpartikel Titandioxidpartikel sind.

3. Verfahren nach Anspruch 1 oder 2 **dadurch gekennzeichnet, dass** die Beschichtungssubstanz SiO₂ oder Al₂O₃ ist.

4. Verfahren nach einem oder mehreren der Ansprüche 1 bis 3 **dadurch gekennzeichnet, dass**
in Schritt a) eine Rührwerksmühle eingesetzt wird.

5. Verfahren nach einem oder mehreren der Ansprüche 1 bis 4 **dadurch gekennzeichnet, dass**
die Suspension in Schritt a) einen pH-Wert von etwa 9 bis 12 oder von etwa 2 bis 5 aufweist.

6. Verfahren nach einem oder mehreren der Ansprüche 1 bis 5 **dadurch gekennzeichnet, dass**
die Suspension in Schritt a) eine Temperatur von etwa 40 bis 80 °C aufweist.

7. Verfahren nach Anspruch 3 **dadurch gekennzeichnet, dass** SiO₂ in einer Menge von etwa 0,1 bis 5 Gew.-% bezogen auf Partikelmasse eingesetzt wird.

8. Verfahren nach einem oder mehreren der Ansprüche 1 bis 7 **dadurch gekennzeichnet, dass**
die Zugabe der Vorläuferverbindung (Schritt b)) spätestens acht Stunden, insbesondere spätestens eine Stunde nach Schritt a) erfolgt.

9. Verfahren nach einem oder mehreren der Ansprüche 1 bis 8 **dadurch gekennzeichnet, dass**
in Schritt c) ein Inline-Dispergierapparat eingesetzt wird.

10. Verfahren nach Anspruch 9 **dadurch gekennzeichnet, dass** der Inline-Dispergierapparat ein Rotor-Stator-System oder ein statischer Mischer ist.

11. Verfahren nach einem oder mehreren der Ansprüche 1 bis 10 **dadurch gekennzeichnet, dass**
in Schritt d) abschließend eine Beschichtung in einer Menge von etwa 0,5 bis 8 Gew.-% gerechnet als Al₂O₃ bezogen auf Partikelmasse stattfindet.

## Claims

1. Method for the inorganic coating of inorganic solid particles in an aqueous suspension with at least one coating substance, comprising the steps:
a) Disagglomeration of the solid particles contained in the aqueous suspension,
b) Addition of a water-soluble precursor of the coating substance to the suspension,
c) Homogenisation of the suspension in a disperser, immediately after Step b), where the temperature and pH value of the suspension do not change significantly in Steps a) to c),
d) Pumping of the suspension into a tank and precipitation of the coating substance onto the particle surface and, optionally, application of further coatings,
e) Separation of the solid particles from the suspension.

2. Method according to Claim 1, **characterised in that** the solid particles are titanium dioxide particles.

3. Method according to Claim 1 or 2, **characterised in that** the coating substance is SiO₂ or Al₂O₃.

4. Method according to one or more of Claims 1 to 3, **characterised in that** an agitator mill is used in Step a).

5. Method according to one or more of Claims 1 to 4, **characterised in that** the suspension displays a pH value of roughly 9 to 12, or of roughly 2 to 5, in Step a).

6. Method according to one or more of Claims 1 to 5, **characterised in that** the suspension displays a temperature of roughly 40 to 80 °C in Step a).

7. Method according to Claim 3, **characterised in that** SiO₂ is used in quantities of roughly 0.1 to 5% by weight, referred to the particle mass.

8. Method according to one or more of Claims 1 to 7, **characterised in that** the precursor is added (Step b)) no later than eight hours, particularly no later than one hour, after Step a).

9. Method according to one or more of Claims 1 to 8, **characterised in that** an inline disperser is used in Step c).

10. Method according to Claim 9, **characterised in that** the inline disperser is a rotor-stator system or a static mixer.

11. Method according to one or more of Claims 1 to 10, **characterised in that** finally, coating is performed with a quantity of roughly 0.5 to 8% by weight Al, calculated as Al₂O₃ and referred to the particle mass, in Step d).

## Revendications

1. Procédé de revêtement inorganique de particules solides inorganiques dans une suspension aqueuse avec au moins une substance de revêtement comprenant les étapes de :
a) désagglomération de particules solides se trouvant dans une suspension aqueuse,
b) addition d'un composé précurseur hydrosoluble de la substance de revêtement dans la suspension,
c) homogénéisation suivant immédiatement l'étape b) de la suspension dans un appareil de dispersion, dans lequel dans les étapes a) à c), la température et le pH de la suspension ne sont pas significativement modifiés,
d) acheminement de la suspension dans un conteneur et précipitation de la substance de revêtement sur la surface particulaire et éventuellement, application d'autres revêtements,
e) séparation des particules solides de la suspension.

2. Procédé selon la revendication 1, **caractérisé en ce que** les particules solides sont des particules de dioxyde de titane.

3. Procédé selon la revendication 1 ou 2, **caractérisé en ce que** la substance de revêtement est du SiO₂ ou du Al₂O₃.

4. Procédé selon une ou plusieurs des revendications 1 à 3, **caractérisé en ce que**, à l'étape a), on utilise un broyeur agitateur.

5. Procédé selon une ou plusieurs des revendications 1 à 4, **caractérisé en ce que** la suspension présente à l'étape a), un pH d'environ 9 à 12 ou d'environ 2 à 5.

6. Procédé selon une ou plusieurs des revendications 1 à 5, **caractérisé en ce que** la suspension présente à l'étape a), une température d'environ 40 à 80°C.

7. Procédé selon la revendication 3, **caractérisé en ce que** le SiO₂ est utilisé en une quantité d'environ 0,1 à 5% en poids par rapport à la masse des particules.

8. Procédé selon une ou plusieurs des revendications 1 à 7, **caractérisé en ce que** l'addition du composé précurseur (étape b)) s'effectue au plus tard huit heures, en particulier une heure après l'étape a).

9. Procédé selon une ou plusieurs des revendications 1 bis 8, **caractérisé en ce que**
à l'étape c), on utilise un appareil de dispersion en ligne.

10. Procédé selon la revendication 9, **caractérisé en ce que**
l'appareil de dispersion en ligne est un système de rotor-stator ou un mélangeur statique.

11. Procédé selon une ou plusieurs des revendications 1 à 10, **caractérisé en ce que**, à l'étape d), un revêtement est ensuite effectué en une quantité d'environ 0,5 à 8% en poids calculée en tant qu'Al₂O₃ par rapport au poids des particules.
